# EUROPÄISCHE PATENTANMELDUNG

(11) **EP 4 311 531 A1**
(43) Veröffentlichungstag der Anmeldung: **31.01.2024**
(21) Anmeldenummer: 22205719.2
(22) Anmeldetag: 07.11.2022
(51) Int. Cl.: A61G 3/08

(54) **VORRICHTUNG ZUR SICHERUNG VON MOBILITÄTSEINGESCHRÄNKTEN PERSONEN, INSBESONDERE ROLLSTUHLFAHRERN, IN EINEM FAHRZEUG**

(30) Priorität: 29.07.2022 DE 202022104341 U
(71) Anmelder: Bruns Holding GmbH & Co. KG, 26689 Apen (DE)
(72) Erfinder: Bruns, Gerit, 26160 Bad Zwischenahn (DE)
(74) Vertreter: Eisenführ Speiser

(57) **Zusammenfassung**

Die Erfindung betrifft eine Vorrichtung zur Sicherung von Personen, insbesondere Rollstuhlfahrern, in einem Fahrzeug, mit
- einer Kopf- und/oder Rückenstütze
- mindestens einer Halterung zum Halten der Kopf- und/oder Rückenstütze, an der die Kopf- und/oder Rückenstütze befestigt ist,
wobei die Halterung dazu eingerichtet ist, den waagerechten Abstand (X_{K}) der Kopfstütze und/oder den waagerechten Abstand (X_{R}) der Rückenstütze zur Person in Fahrtrichtung zu verändern. Die Erfindung ist dadurch gekennzeichnet, dass
die Halterung mindestens eine Dämpfungsvorrichtung zum Dämpfen eines Aufpralls einer Person bzw. eines Rollstuhls in die Kopf- und/oder Rückenstütze aufweist.

## Beschreibung

Die Erfindung betrifft eine Vorrichtung zur Sicherung von mobilitätseingeschränkten Personen, insbesondere Rollstuhlfahrern, in einem Fahrzeug, mit einer Kopf- und/oder Rückenstütze und mindestens einer Halterung zum Halten der Kopf- und/oder Rückenstütze, an der die Kopf- und/oder Rückenstütze befestigt ist, und wobei die Halterung dazu eingerichtet ist, den waagerechten Abstand der Kopfstütze und/oder den waagerechten Abstand der Rückenstütze zur Person in Fahrtrichtung zu verändern.

Die Erfindung betrifft weiterhin ein Fahrzeug mit einer wie vorstehend beschriebenen Vorrichtung, die an einem Boden oder einer Seitenwand des Fahrzeugs befestigt ist.

Zur Sicherung von Personen, insbesondere mobilitätseingeschränkten Personen in Fahrzeugen werden verschiedene Gurtsysteme, Lehnen und Schienensysteme verwendet, bei denen die zu sichernde Person üblicherweise in ihrem Rollstuhl verbleibt und der Rollstuhl über die Sicherungssysteme mit dem Fahrzeug verbunden wird.

Hierbei besteht das grundsätzliche Problem, dass im Falle eines Aufpralls, insbesondere im Falle eines Aufpralls von hinten in Fahrtrichtung, es zu einem Reboundereignis kommt, bei dem die Person und der Rollstuhl in die zur Aufprallrichtung entgegengesetzte Richtung beschleunigt werden. Hierdurch trifft die Person mit ihrem Kopf und/oder Rücken auf der bestehenden Kopf- und/oder Rückenstütze auf, wodurch zusätzliche gesundheitliche Schäden entstehen können.

Zur Vermeidung derartiger gesundheitlicher Risiken existiert im Stand der Technik eine in der WO 2020/077242 offenbarte Erfindung mit einer "Rear excursion backrest for wheelchair accessible vehicles".Offenbart wird dabei eine "moveable backrest" mit einem Sperrklinkenmechanismus ("ratchet and pawl mechanism"), welcher dazu ausgebildet ist, im Falle einer Aufprallsituation dafür zu sorgen, dass eine Rückenstütze oder Kopfstütze einer sich nach vorne bewegenden Person folgt und eine Rückbewegung der Person bei einem sogenannten "rebound" verhindert wird. Der beschriebene Sperrklinkenmechanismus erfordert einen nicht geringen apparativen Aufwand.

Aufgabe dieser Erfindung ist es demgegenüber, eine Vorrichtung bereitzustellen, bei der im Bereich der Kopf- und/oder Rückenstütze der Aufprall einer Person bzw. eines Rollstuhls mit vergleichsweise einfachen Mitteln für die Person vorteilhaft unterstützt wird, insbesondere bei einem durch ein Reboundereignis verursachten Aufprall.

Die Erfindung löst die Aufgabe in einem ersten Aspekt dadurch, dass die Halterung mindestens eine Dämpfungsvorrichtung zum Dämpfen eines Aufpralls einer Person bzw. eines Rollstuhls in die Kopf- und/oder Rückenstütze aufweist.

Die Dämpfungsvorrichtung wirkt hierbei vorzugsweise in Fahrtrichtung des Fahrzeugs und beruht auf der Erkenntnis, dass insbesondere für mobilitätseingeschränkte Personen erprobte Dämpfungsvorrichtungen und -mechanismen zur Sicherung von Personen eingesetzt werden. Durch das Dämpfen des Aufpralls ist es möglich, das Verletzungsrisiko einer Person zu reduzieren. Die erfindungsgemäße Dämpfungsvorrichtung ist vorteilhaft in die Halterung integriert.

Gemäß einer Weiterbildung der Erfindung ist die mindestens eine Dämpfungsvorrichtung dazu eingerichtet, im Falle eines Aufpralls des Fahrzeugs, insbesondere eines Aufpralls in oder entgegen der Fahrtrichtung, und bei dem anschließenden Rebound das Auftreffen des Rollstuhlfahrers bzw. des Rollstuhls auf die Kopf- und/oder Rückenstütze zu dämpfen.Hierbei wird erfindungsgemäß erreicht, dass die Dämpfungsvorrichtung zum einen dazu dient, unmittelbar zum Zeitpunkt eines Aufpralls, insbesondere eines Aufpralls in Fahrtrichtung, den durch die Trägheit der Person bzw. des Rollstuhls entstehenden Aufprall und/oder Druck auf die Kopf- und/oder Rückenstütze zu dämpfen, und zum anderen dazu dient, den Aufprall der Personen bzw. des Rollstuhls auf der Kopf- und/oder Rückenstütze nach dem Reboundereignis zu dämpfen.

Gemäß einer Weiterbildung der Erfindung weist die Vorrichtung eine Säule auf. Gemäß einer weiteren Weiterbildung der Erfindung ist die mindestens eine Halterung an der Säule befestigt.

Gemäß einer bevorzugten Ausführungsform der Erfindung weist die Vorrichtung mindestens einen schwenkbaren Arm auf, an dem die mindestens eine Halterung befestigt ist, wobei vorzugsweise die jeweilige Halterung der Kopf- und Rückenstütze jeweils an einem separat schwenkbaren Arm befestigt ist, und wobei der mindestens eine schwenkbare Arm an der Säule befestigt ist. Durch den mindestens einen schwenkbaren Arm weist die Vorrichtung mehr Freiheitsgrade auf, wodurch eine flexiblere Handhabung und Einstellbarkeit gewährleistet wird.

Gemäß einer vorteilhaften alternativen Ausführungsform der Erfindung ist der mindestens eine schwenkbare Arm teleskopierbar. Gemäß einer weiteren Weiterbildung der Erfindung ist der mindestens eine schwenkbare Arm um eine senkrechte Achse schwenkbar. Die Teleskopierbarkeit und Schwenkbarkeit des mindestens einen schwenkbaren Arms um eine senkrechte Achse ermöglicht eine nochmalige Erhöhung der Flexibilität und Einstellbarkeit, insbesondere in waagerechter Richtung, der Kopf- und/oder Rückenstütze.

Gemäß einer Ausführungsform der Erfindung weist die Halterung mindestens eine Höhenverstelleinrichtung auf, die dazu eingerichtet ist, die Kopf- und/oder Rückenstütze auf eine bestimmte Höhe einzustellen. Die Einstellbarkeit der Kopf- und/oder Rückenstütze in senkrechter Richtung ermöglicht eine genauere Anpassung der Stützen an die Kopf- und Rückenposition der zu sichernden Person.

Gemäß einer Weiterbildung der Erfindung weist die Vorrichtung Mittel zur Befestigung am Boden des Fahrzeugs mit mindestens einer Platte mit mehreren Öffnungen zum Durchführen von Bolzen und/oder Befestigungsmittel zum formschlüssigen Verriegeln an dem Fahrzeug auf.

Gemäß einer Fortbildung der Erfindung weist die mindestens eine Dämpfungsvorrichtung ein Dämpfungselement auf. Das Dämpfungselement dient der Aufnahme der beim Aufprall übertragenen Energie derart, dass die im Zuge der Verformung des Dämpfungselements entstehende negative Beschleunigung, durch die die bei dem Aufprall wirkenden Kräfte auf die Personen entstehen, in ihrem Betrag geringer ist als bei einem Aufprall auf ein nicht oder nur geringfügig verformbares Element. Folglich sind die auf die Person wirkenden Kräfte bei Vorhandensein eines Dämpfungselements geringer.

Gemäß einer Weiterbildung der Erfindung weist die Dämpfungsvorrichtung eine Rastung auf, die dazu eingerichtet ist, einen Widerstand gegen die Bewegung der Kopf- und/oder Rückenstütze bis zu einem Belastungsgrenzwert, der unterhalb der bei einem Aufprall oder Rebound auf der Kopf- und/oder Rückenstütze erzeugten Belastung liegt, zu bilden. Durch die Rastung wird somit sichergestellt, dass die Dämpfungsvorrichtung ausschließlich im Falle eines Aufpralls belastet wird bzw. die Energie der auftreffenden Person bzw. des Rollstuhls aufnimmt. Dies ist insbesondere bei nicht reversiblen Bewegungen oder Verformungen von Dämpfungselementen von Bedeutung.

Gemäß einer Weiterbildung der Erfindung besteht die Halterung aus Hohlprofilen.

Gemäß einer Weiterbildung der Erfindung ist das Dämpfungselement innerhalb der Halterung angeordnet.

Die Erfindung löst die Aufgabe in einem weiteren Aspekt mit einem Fahrzeug zum Transport von Personen, insbesondere Rollstuhlfahrern, mit einer Fahrzeugstruktur mit einer an der Fahrzeugstruktur befestigbaren Vorrichtung nach einer der vorstehend beschriebenen Weiterbildungen/Fortbildungen/Ausführungsformen der Erfindung. Das Fahrzeug macht sich in diesem Aspekt dieselben Vorteile und Erkenntnisse zunutze wie die Vorrichtung gemäß dem ersten Aspekt, sodass zu Vermeidung von Wiederholungen diesbezüglich auf die obigen Ausführungen verwiesen wird.

Gemäß einer Weiterbildung der Erfindung gemäß dem zweiten Aspekt ist die Vorrichtung an einem Boden oder einer Seitenwand des Fahrzeugs befestigt.

Die Erfindung wird nachfolgend unter Bezugnahme auf die beigefügten Figuren anhand von bevorzugten Ausführungsbeispielen näher beschrieben. Hierbei zeigt:
- Fig. 1: eine schematische Darstellung des Fahrzeugs mit einer in einem Rollstuhl sitzen Person und der an der Fahrzeugstruktur befestigbaren Vorrichtung in zur Sicherung ausgerichteter Position gemäß einem bevorzugten Ausführungsbeispiel in einer Draufsicht
- Fig. 2: eine schematische Darstellung des hinteren Abschnitts des in Fig. 1 gezeigten Fahrzeugs mit der Vorrichtung in geöffneter Position in einer Draufsicht
- Fig. 3: eine schematische Darstellung der inneren unteren Fahrzeugstruktur mit der in einem Rollstuhl sitzenden Person und der Vorrichtung in zur Sicherung ausgerichteter Position gemäß dem bevorzugten Ausführungsbeispiel in einer Draufsicht
- Fig. 4: eine schematische Darstellung der inneren unteren Fahrzeugstruktur mit der in einem Rollstuhl sitzenden Person und der Vorrichtung in geöffneter Position gemäß dem bevorzugten Ausführungsbeispiel in einer Draufsicht
- Fig. 5: eine schematische Darstellung der Vorrichtung gemäß dem bevorzugten Ausführungsbeispiel in einer Draufsicht
- Fig. 6: den in Fig. 5 gezeigten Arm und die Halterung der Kopfstütze in einer vergrößerten Darstellung
- Fig. 7: einen detaillierten Ausschnitt im Bereich der Halterung der Kopfstütze mit einer Querschnittansicht der Halterung gemäß dem bevorzugten Ausführungsbeispiel
- Fig. 8: den in Fig. 5 gezeigten Arm und die Halterung der Rückenstütze in einer vergrößerten Darstellung
- Fig. 9: einen detaillierten Ausschnitt im Bereich der Halterung der Rückenstütze mit einer Querschnittansicht der Halterung gemäß dem bevorzugten Ausführungsbeispiel

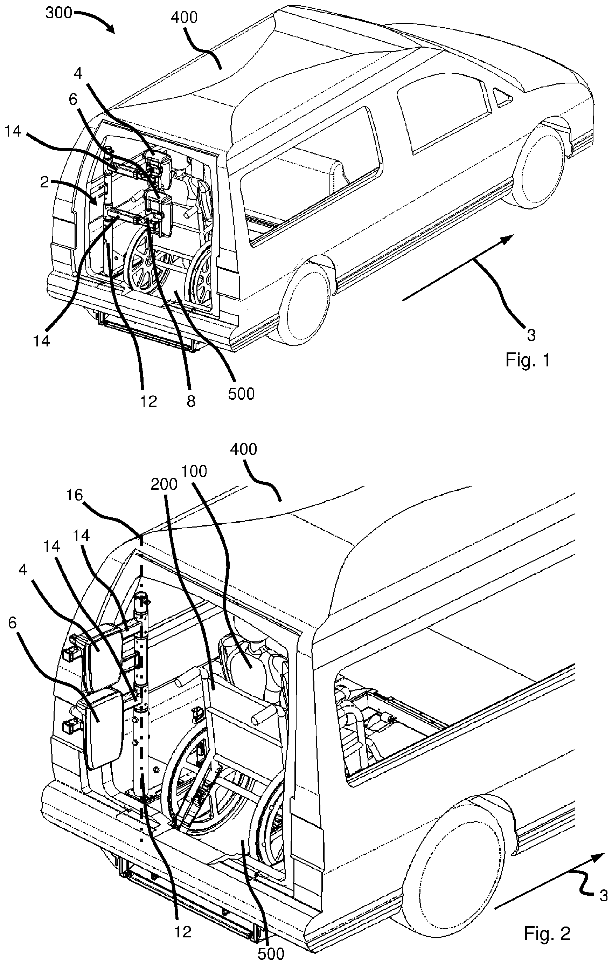

Fig. 1 zeigt ein Fahrzeug 300 zum Transport von Personen 100, insbesondere Rollstuhlfahrern, mit einer Fahrzeugstruktur 400 und einer an der Fahrzeugstruktur 400 befestigbaren Vorrichtung 2 gemäß einem bevorzugten Ausführungsbeispiel. Eine in einem Rollstuhl 200 sitzende Person 100 ist dabei über den Rollstuhl innerhalb der Fahrzeugstruktur 400 bzw. auf dem Fahrzeugboden 500 gesichert. Die Vorrichtung 2 mit einer Kopf- 4 und einer Rückenstütze 6 befindet sich in einer zur Sicherung ausgerichteten Position. Die Vorrichtung weist zwei schwenkbaren Arme 14 und eine Säule 12 auf, wobei die Arme 14 an der Säule 12 drehbar befestigt sind. Die Säule 12 ist wiederum an der Fahrzeugstruktur 400 befestigt. Bezugszeichen 3 veranschaulicht mit einem Pfeil die generelle Fahrtrichtung des Fahrzeugs 300, die Längsachse des Fahrzeugs ist parallel zu dem Pfeil angeordnet.

Fig. 2 zeigt den hinteren Abschnitt des in Fig. 1 gezeigten Fahrzeugs 300 mit der Vorrichtung 2 in einer geöffneten Position. In der hier gezeigten geöffneten Position sind die beiden schwenkbaren Arme 14, an denen die Kopf- 4 und Rückenstütze 6 befestigt sind, um ca. 90° gegenüber der Position zur Sicherung um eine senkrechte Achse 16 gedreht.

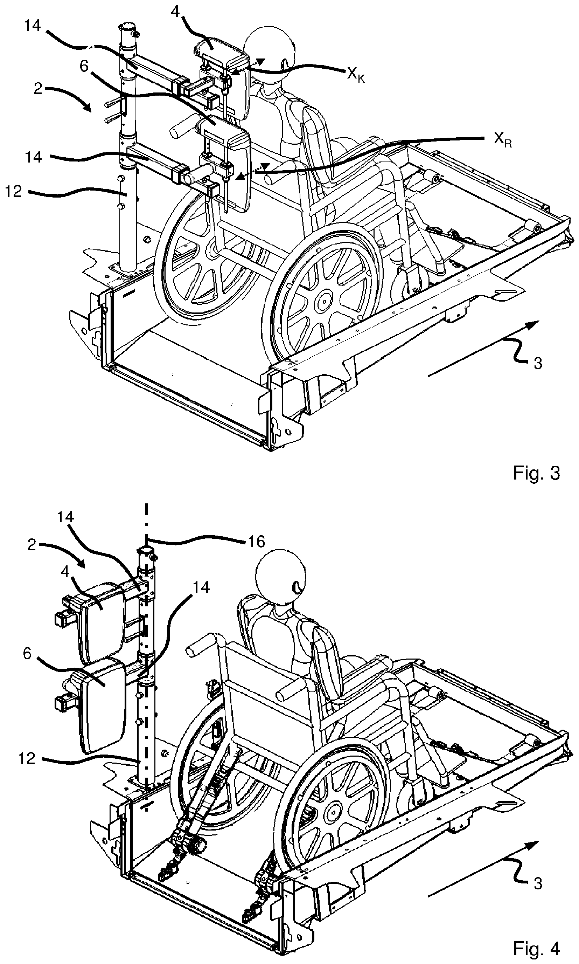

Fig. 3 zeigt die innere untere Fahrzeugstruktur 400 des hinteren Abschnitts des Fahrzeugs 300 gemäß dem Ausführungsbeispiel. Hierbei befindet sich die Vorrichtung 2 in zur Sicherung ausgerichteter Position. Die in dem Rollstuhl 200 sitzende Person 100 bzw. der Rollstuhl 200 ist gemäß Fig. 1 und 2 innerhalb der Fahrzeugstruktur bzw. auf dem Fahrzeugboden gesichert. Die Kopfstütze befindet sich in einem waagerechten Abstand X_{K} und die Rückenstütze in einem waagerechten Abstand X_{R} zur Person.

Analog zu Fig. 2 zeigt Fig. 4 die Vorrichtung 2 in geöffneter Position, wobei die beiden schwenkbaren Arme 14 um die senkrechte Achse 16 um ca. 90° gedreht sind.

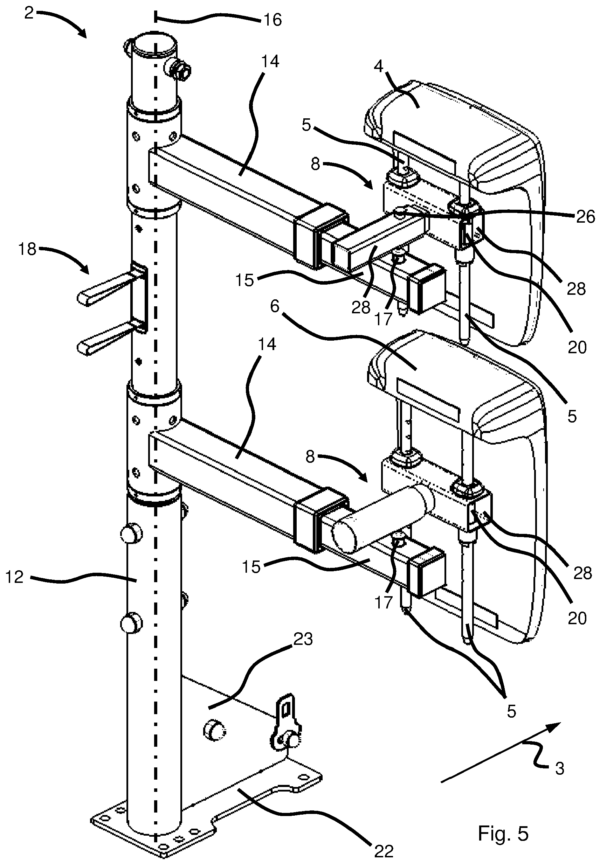

Fig. 5 zeigt eine vergrößerte Darstellung der Vorrichtung 2 gemäß dem Ausführungsbeispiel mit zwei schwenkbaren, teleskopierbaren Armen 14. An der Säule 12 befinden sich zwei Arretierungen 18 für jeweils einen der Arme 14, die gelöst werden müssen, um den zugehörigen Arm 14 um die Säule 16 zu schwenken. Die Säule 12 bzw. die Vorrichtung 2 ist über eine Befestigungsplatte 22 mit der Fahrzeugstruktur verbindbar ausgeführt. Die Befestigungsplatte 22 ist an die Fahrzeugstruktur im Betrieb fest montiert. Mit einem Versteifungsblech 23 wird die Säule 12 gegenüber der Befestigungsplatte 22 zusätzlich fixiert.

Die schwenkbaren, teleskopierbaren Arme 14 weisen jeweils ein Ausziehprofil 15 auf. Die Ausziehprofile 15 können jeweils in Längsrichtung des zugehörigen Armes 14 in den zugehörigen Arm 14 ein- und ausgeschoben werden. Die Ausziehprofile 15 weisen jeweils eine Ausziehprofil-Fixiereinrichtung zur Fixierung der Ausziehposition auf. An den Armen 14 bzw. an den Ausziehprofilen 15 sind jeweils Halterungen 8 zum Halten der Kopf- 4 bzw. Rückenstütze 6 befestigt. Die Halterungen 8 sind dazu eingerichtet, die Abstände der Kopf-4 bzw. Rückenstütze 6 (X_{K}, X_{R}) zur Person in Fahrtrichtung 3 zu verändern. Über die Höhenverstelleinrichtungen 20 kann die senkrechte Position der Kopf- 4 bzw. Rückenstütze 6 an die Person angepasst werden. Das waagerechte Einstellen der Stützen 4,6 erfolgt u.a. über das Teleskopieren der Schwenkarme 14 bzw. das Ein- und Ausziehen der Ausziehprofile 15 und über die erwähnten Halterungen 8.

Die Halterungen 8 bestehen jeweils aus Hohlprofilen 28 oder weisen solche auf, zusammen mit anderen Komponenten. Bei dem hier gezeigten Ausführungsbeispiel weisen die Halterungen 8 T-förmige Konstruktionen aus unter anderem Hohlprofilen 28 auf, wobei die quer zur Fahrtrichtung verlaufenden Hohlprofile 28 jeweils Löcher zur Aufnahme der Kopfstütze 4 bzw. der Rückenstütze 6 aufweisen. Hierfür weisen die Stützen 4,6 jeweils senkrecht verlaufende Stangen 5 auf der Rückseite auf, die in die Löcher eingeschoben sind. Die Halterung 8 der Kopfstütze 4 bzw. die Dämpfungsvorrichtung der Kopfstütze 4 weist eine Rastung 26 auf, die einen Widerstand gegen die Bewegung der Kopfstütze 4 bis zu einem Belastungsgrenzwert F_{Grenz}, der unterhalb der bei einem Aufprall oder Rebound auf der Kopf- und/oder Rückenstütze 6 erzeugten Belastung liegt, bildet.

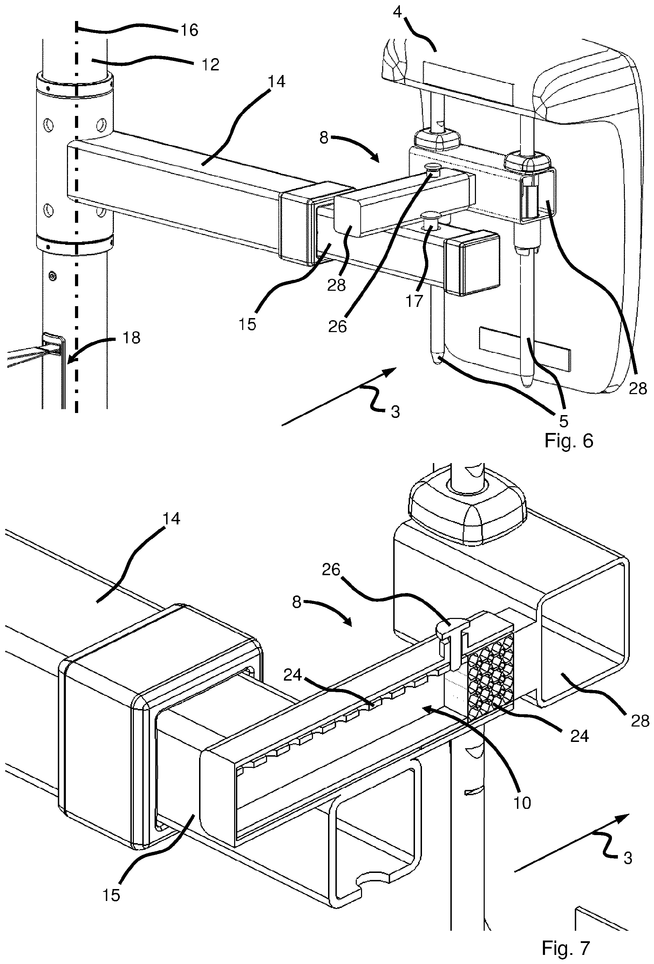

Fig. 6 zeigt den Arm 14 und die Halterung 8 der Kopfstütze 4 mit den Hohlprofilen 28 gemäß dem Ausführungsbeispiel in einer vergrößerten Darstellung. Befindet sich der schwenkbare Arm 14 bzw. die Kopfstütze 4 in der Position zur Sicherung der Person 100, wie in Fig.6 zu sehen, kommt es bei einem Aufprall, insbesondere bei einem Aufprall in oder entgegengesetzt der Fahrtrichtung 3, folglich zu einer Krafteinwirkung auf die Halterung 8 bzw. die Dämpfungsvorrichtung 10.

Fig. 7 zeigt einen detaillierten Ausschnitt im Bereich der Halterung 8 der Kopfstütze 4 der Vorrichtung 2 gemäß dem Ausführungsbeispiel als Querschnittsansicht der Halterung 8 und des zugehörigen Arms 14. Die Rastung 26 wird bei einem Aufprall, insbesondere bei einem Aufprall in oder entgegengesetzt der Fahrtrichtung 3, aufgrund einer einwirkenden Kraft, die größer ist als der Belastungsgrenzwert F_{Grenz}, überwunden. Folglich kommt es zu einer Verformung des hier gezeigten Dämpfungselements 24 bzw. die bei dem Aufprall einwirkende Energie wird innerhalb des Dämpfungselements 24 in Verformungsenergie umgesetzt, wobei die Dämpfungsvorrichtung 10 entgegengesetzt zur Fahrtrichtung zusammengeschoben wird.

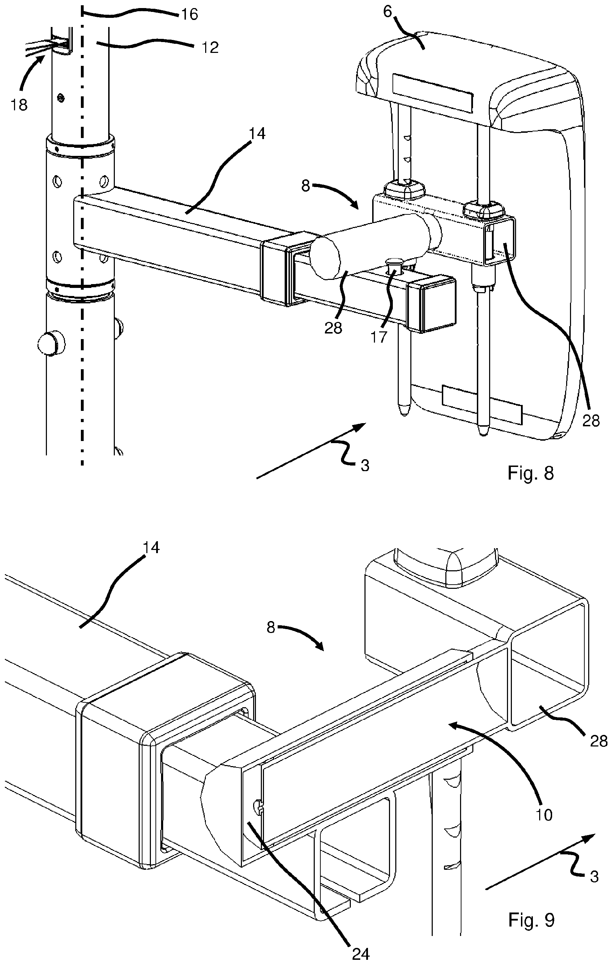

Analog zu den vorstehenden Figuren zeigt Fig. 8 den Arm 14 und die Halterung 8 der Rückenstütze 6 mit den Hohlprofilen 28 gemäß dem Ausführungsbeispiel in einer vergrößerten Darstellung.

Fig. 9 zeigt analog zu Fig. 7 einen nochmals vergrößerten Ausschnitt im Bereich der Halterung 8 der Rückenstütze 4 der Vorrichtung 2. Hier erfolgt bei einem Aufprall die Dämpfung durch ein Dämpfungselement 24, das als Luftdruckfeder ausgeführt ist, wobei die Dämpfungsvorrichtung 10 bzw. die Luftdruckfeder entgegengesetzt zur Fahrtrichtung zusammengeschoben wird.

### Bezuqszeichenliste

- 2: Vorrichtung
- 3: Fahrtrichtung (Längsachse des Fahrzeugs)
- 4: Kopfstütze
- 5: Stange (einer Kopf- oder Rückenstütze)
- 6: Rückenstütze
- 8: Halterung
- 10: Dämpfungsvorrichtung
- 12: Säule
- 14: Schwenkbarer Arm
- 15: Ausziehprofil (eines schwenkbaren Arms)
- 16: Senkrechte Achse
- 17: Ausziehprofil-Fixiereinrichtung
- 18: Arretierung
- 20: Höhenverstelleinrichtung
- 22: Befestigungsplatte
- 23: Versteifungsblech
- 24: Dämpfungselement
- 26: Rastung
- 28: Hohlprofil
- 100: Person
- 200: Rollstuhl
- 300: Fahrzeug
- 400: Fahrzeugstruktur
- 500: Fahrzeugboden
- X_{K}: Waagerechter Abstand der Kopfstütze zur Person
- X_{R}: Waagerechter Abstand der Rückenstütze zum Rollstuhl bzw. zur Person
- F_{Grenz}: Belastungsgrenzwert

## Patentansprüche

1. Vorrichtung (2) zur Sicherung von Personen (100), insbesondere Rollstuhlfahrern, in einem Fahrzeug (300), mit
- einer Kopf- (4) und/oder Rückenstütze (6)
- mindestens einer Halterung (8) zum Halten der Kopf- (4) und/oder Rückenstütze (6), an der die Kopf- (4) und/oder Rückenstütze (6) befestigt ist,
wobei die Halterung (8) dazu eingerichtet ist, den waagerechten Abstand (X_{K}) der Kopfstütze (4) und/oder den waagerechten Abstand (X_{R}) der Rückenstütze (6) zur Person (100) in Fahrtrichtung (3) zu verändern,
**dadurch gekennzeichnet, dass**
die Halterung (8) mindestens eine Dämpfungsvorrichtung (10) zum Dämpfen eines Aufpralls einer Person (100) bzw. eines Rollstuhls (200) in die Kopf- (4) und/oder Rückenstütze (6) aufweist.

2. Vorrichtung nach Anspruch 1, **dadurch gekennzeichnet, dass**
die mindestens eine Dämpfungsvorrichtung (10) dazu eingerichtet ist, im Falle eines Aufpralls des Fahrzeugs (300), insbesondere eines Aufpralls in oder entgegen der Fahrtrichtung (3), und bei dem anschließenden Rebound das Auftreffen des Rollstuhlfahrers (100) bzw. des Rollstuhls (200) auf die Kopf- (4) und/oder Rückenstütze (6) zu dämpfen.

3. Vorrichtung nach Anspruch 1 oder 2, **dadurch gekennzeichnet, dass**
die Vorrichtung (2) eine Säule (12) aufweist.

4. Vorrichtung nach Anspruch 3, **dadurch gekennzeichnet, dass** die mindestens eine Halterung (8) an der Säule (12) befestigt ist.

5. Vorrichtung nach einem der Ansprüche 1 bis 3, **dadurch gekennzeichnet, dass**
die Vorrichtung (2) mindestens einen schwenkbaren Arm (14) aufweist, an dem die mindestens eine Halterung (8) befestigt ist, wobei vorzugsweise die jeweilige Halterung (8) der Kopf- (4) und Rückenstütze (6) jeweils an einem separat schwenkbaren Arm (14) befestigt ist, und wobei der mindestens eine schwenkbare Arm (14) an der Säule (12) befestigt ist.

6. Vorrichtung nach Anspruch 5, **dadurch gekennzeichnet, dass** der mindestens eine schwenkbare Arm (14) teleskopierbar ist.

7. Vorrichtung nach Anspruch 5 oder 6, **dadurch gekennzeichnet, dass** der mindestens eine schwenkbare Arm (14) um eine senkrechte Achse (16) schwenkbar ist.

8. Vorrichtung nach einem der vorstehenden Ansprüche, **dadurch gekennzeichnet, dass**
die Halterung (8) mindestens eine Höhenverstelleinrichtung (20) aufweist, die dazu eingerichtet ist, die Kopf- (4) und/oder Rückenstütze (6) auf eine bestimmte Höhe einzustellen.

9. Vorrichtung nach einem der vorstehenden Ansprüche, **dadurch gekennzeichnet, dass**
die Vorrichtung (2) Mittel zur Befestigung am Boden des Fahrzeugs (300) mit mindestens einer Platte (22) mit mehreren Öffnungen zum Durchführen von Bolzen und/oder Befestigungsmittel zum formschlüssigen Verriegeln an dem Fahrzeug (300) aufweist.

10. Vorrichtung nach einem der vorstehenden Ansprüche, **dadurch gekennzeichnet, dass**
die mindestens eine Dämpfungsvorrichtung (10) ein Dämpfungselement (24) aufweist.

11. Vorrichtung nach Anspruch 10 oder 11, **dadurch gekennzeichnet, dass**
die Dämpfungsvorrichtung (10) eine Rastung (26) aufweist, die dazu eingerichtet ist, einen Widerstand gegen die Bewegung der Kopf- (4) und/oder Rückenstütze (6) bis zu einem Belastungsgrenzwert (F_{Grenz}), der unterhalb der bei einem Aufprall oder Rebound auf der Kopf- (4) und/oder Rückenstütze (6) erzeugten Belastung liegt, zu bilden.

12. Vorrichtung nach einem der vorstehenden Ansprüche, **dadurch gekennzeichnet, dass**
die Halterung (8) Hohlprofile (28) aufweist.

13. Vorrichtung nach Anspruch 13, **dadurch gekennzeichnet, dass**
das Dämpfungselement (24) innerhalb der Halterung (8) angeordnet ist.

14. Fahrzeug (300) zum Transport von Personen (100), insbesondere Rollstuhlfahrern, mit einer Fahrzeugstruktur (400) und einer an der Fahrzeugstruktur (400) befestigbaren Vorrichtung (2) nach mindestens einem der vorstehenden Ansprüche.

15. Fahrzeug nach Anspruch 14, **dadurch gekennzeichnet, dass**
die Vorrichtung (2) an einem Boden oder einer Seitenwand des Fahrzeugs (300) befestigt ist.
